# DEMANDE DE BREVET EUROPEEN

(11) **EP 2 172 367 A2**
(43) Date de publication de la demande: **07.04.2010**
(21) Numéro de dépôt: 09305872.5
(22) Date de dépôt: 21.09.2009
(51) Int. Cl.: B60R 5/04

(54) **Plancher de coffre mobile pour véhicule automobile**

(30) Priorité: 01.10.2008 FR 0805423
(71) Demandeur: Renault S.A.S., 92100 Boulogne-Billancourt (FR)
(72) Inventeur: Hewak, Gregor, 95490 Vaureal (FR); Ollivier, Jean-Louis, 78960 Voisins Le Bretonneux (FR)

(57) **Abrégé**

L'invention concerne un plancher de coffre mobile pour véhicule automobile, comportant un plateau (1) déplaçable entre une position basse et une position haute sensiblement horizontales dans le coffre à bagages du véhicule. Le plateau (1) comporte, sur chacun de ses deux bords longitudinaux, un axe (3) engagé de façon pivotante dans une glissière (4) inclinée et formant avec le plancher fixe (6) de ce coffre un angle aigu. Le plateau (1) comporte également une poignée (7) fixée au plateau (1) permettant de déplacer celui-ci, de telle sorte que chacun desdits axes (3) se déplace dans la glissière correspondante (4). Des moyens de retenue pour l'extrémité du plateau (1) opposée aux dits axes (3) sont prévus dans une zone située près de ladite ouverture d'accès (2) pour maintenir le plateau (1) dans une position horizontale. L'extrémité haute de chaque glissière (4) comporte une partie sensiblement horizontale (4a) sur laquelle peut s'engager l'axe (3) correspondant du plateau (1), lorsque celui-ci est dans la position haute. Des moyens de verrouillage sont prévus pour verrouiller le plateau (1) dans cette position et sont adaptés pour verrouiller ledit axe (3) lorsque celui-ci est engagé sur la partie sensiblement horizontale (4a), sous l'effet d'une traction exercée sur le plateau (1), et pour déverrouiller ledit axe (3) sous l'effet d'une poussée exercée sur ledit plateau (1)

## Description

L'invention concerne un plancher de coffre mobile pour véhicule automobile, comportant un plateau déplaçable entre une position basse et une position haute sensiblement horizontales dans le coffre à bagages du véhicule.

Les coffres à bagages des véhicules automobiles possèdent un plancher fixe et parfois une tablette disposée à la partie supérieure du coffre sur laquelle peuvent être posés des objets légers.

On connaît d'autre part des planchers mobiles suivant la hauteur du coffre qui permettent de diviser l'espace de rangement et d'augmenter ainsi la surface de support des objets.

On connaît ainsi, selon le document FR-2 881 387, un plancher mobile comportant un panneau horizontal supporté par des équerres et un mécanisme à bielles commandé par un câble permettant de régler la hauteur du plateau.

Ce type de plancher mobile présente l'inconvénient d'être complexe et ainsi d'être couteux à fabriquer.

Le document EP 1 447 311 décrit un plancher mobile de coffre qui est lui aussi déplacé suivant la hauteur du coffre par un mécanisme à bielles commandé par un système à vis sans fin qui de ce fait présente les mêmes inconvénients que celui décrit dans le FR-2 881 387.

Le document FR-2 887 806 décrit un plancher mobile de coffre dont la montée et la descente sont commandées par un système pignon crémaillère qui présente également l'inconvénient d'être compliqué et coûteux.

Le but de la présente invention est de remédier aux inconvénients des réalisations connues, en créant un plancher mobile de coffre de conception simple et peu coûteux à fabriquer, tout en étant commode à utiliser.

Ce but est atteint, selon l'invention, grâce à un plancher de coffre mobile pour véhicule automobile, comportant un plateau déplaçable entre une position basse et une position haute sensiblement horizontales dans le coffre à bagages du véhicule, **caractérisé en ce que** le plateau comporte, près de son extrémité opposée à l'ouverture d'accès au coffre à bagages et sur chacun de ses deux bords longitudinaux, un axe engagé de façon pivotante dans une glissière inclinée s'étendant dans un plan vertical adjacent à l'une des faces du coffre et formant avec le plancher fixe de ce coffre un angle aigu ouvert vers ladite ouverture d'accès, une poignée fixée au plateau permettant de déplacer celui-ci, de telle sorte que chacun desdits axes se déplace dans la glissière correspondante entre une extrémité basse et une extrémité haute de la glissière, des moyens de retenue pour l'extrémité du plateau opposée aux dits axes étant prévus dans une zone située près de ladite ouverture d'accès pour maintenir le plateau dans une position horizontale lorsque lesdits axes sont situés aux extrémités hautes des glissières et des moyens de verrouillage étant prévus pour verrouiller le plateau dans cette position, en ce que l'extrémité haute de chaque glissière comporte une partie sensiblement horizontale sur laquelle peut s'engager l'axe correspondant du plateau, lorsque celui-ci est dans la position haute, en ce que lesdits moyens de verrouillage sont adaptés pour verrouiller ledit axe lorsque celui-ci est engagé sur la partie sensiblement horizontale prévue sur l'extrémité supérieure de la glissière correspondante et en ce que lesdits moyens de verrouillage sont adaptés pour verrouiller ledit axe sous l'effet d'une traction exercée sur le plateau et pour déverrouiller ledit axe sous l'effet d'une poussée exercée sur ledit plateau.

Ainsi, le déplacement du plateau entre les positions basse et haute est assuré par de simples glissières inclinées et par une traction ou une poussée exercée manuellement par l'utilisateur sur le plateau.

Ces simples glissières sont beaucoup moins coûteuses à réaliser que les mécanismes à bielles articulées ou à pignon crémaillère utilisés dans les planchers mobiles connus.

De même, la position haute du plateau est ainsi bloquée, lorsque les deux axes du plateau reposent sur les extrémités sensiblement horizontales des glissières.

Par ailleurs, ces moyens de verrouillage et de déverrouillage sont particulièrement simples à utiliser. En effet, il suffit à l'utilisateur de tirer ou de pousser sur le plateau.

Pour réduire les frottements, de préférence, sur chaque axe est montée une bague rotative ou patin ou tout autre moyen permettant la rotation ou la translation engagé sensiblement sans jeu dans la glissière correspondante.

Dans un premier mode de réalisation, lesdits moyens de retenue comprennent un épaulement réalisé dans le coffre arrière près du bord inférieur de l'ouverture d'accès à ce coffre, ledit épaulement pouvant être formé simplement sur l'habillage intérieur du coffre.

Les moyens de verrouillage peuvent par exemple comprendre un levier pivotant sollicité par un ressort de rappel exerçant une force sur ledit axe pour verrouiller ce dernier par l'intermédiaire d'un organe de verrouillage lorsqu'il est engagé sur ladite partie sensiblement horizontale.

Dans un second mode de réalisation, les moyens de retenue du plateau comprennent au moins un évidement réalisé près du bord inférieur de l'ouverture d'accès au coffre dans lequel peut s'engager au moins une saillie complémentaire réalisée sur l'extrémité du plateau adjacente à l'ouverture d'accès au coffre.

Cet évidement peut être réalisé sur le bord supérieur d'une plaque fixée sous le bord inférieur de l'ouverture d'accès au coffre.

Dans ce mode de réalisation, la poignée est de préférence située près de l'extrémité du plateau adjacente à l'ouverture d'accès au coffre, ladite poignée étant mobile entre une position encastrée dans le plateau dans laquelle elle verrouille le plateau par rapport à une partie fixe du coffre à bagages située sous le bord inférieur de l'ouverture d'accès au coffre et une position dressée vers le haut dans laquelle la poignée déverrouille le plateau par rapport à la partie fixe.

A cet effet, la poignée comporte, de préférence, un organe qui, en position de verrouillage, fait saillie par rapport à ladite extrémité du plateau et vient en prise avec un organe complémentaire réalisé dans une plaque fixée sous le bord inférieur de l'ouverture d'accès au coffre.

De préférence également, le plancher de coffre comprend en outre, des moyens pour verrouiller le plateau par rapport à une partie fixe située sous le bord inférieur de l'ouverture d'accès au coffre, lorsque le plateau est en position basse.

Ce verrouillage évite que le plateau bouge et émette du bruit lorsqu'il est en position basse.

Ces moyens de verrouillage peuvent être analogues à ceux assurant la retenue du plateau.

D'autres particularités et avantages de l'invention apparaîtront encore tout au long de la description ci-après.

Aux dessins annexés, donnés à titre d'exemples, non limitatifs :
- la figure 1 est une vue en perspective d'une première version du plancher de coffre mobile selon l'invention, le plateau étant en position basse,
- la figure 2 est une vue analogue à la figure 1, le plateau étant en position haute,
- la figure 3 est une vue analogue aux figures 1 et 2, le plateau étant en position pivotée avant son déplacement vers la position haute,
- la figure 4 est une vue en élévation d'un boîtier latéral comportant une glissière pour guider le déplacement du plateau vers la position haute,
- la figure 5 est une vue analogue à la figure 4 montrant un axe du plateau en position haute et verrouillée,
- la figure 6 est une vue en perspective d'un second mode de réalisation d'un plancher mobile, le plateau étant en position basse,
- la figure 7 est une vue analogue à la figure 6, le plateau étant en position haute,
- la figure 8 est une vue de côté montrant le plateau en position basse et haute,
- la figure 9 est une vue montrant une glissière pour guider le déplacement du plateau entre la position basse et la position haute,
- la figure 10 est une vue en perspective montrant la poignée du plateau en position verrouillée,
- la figure 10A est une vue en perspective de la poignée seule,
- la figure 11 est une vue en coupe longitudinale du plateau en position basse et en position haute montrant la poignée en position verrouillée et en position déverrouillée,
- la figure 12 est une autre vue en coupe longitudinale du plateau en position basse et en position haute montrant les moyens de retenue du plateau à une partie fixe.

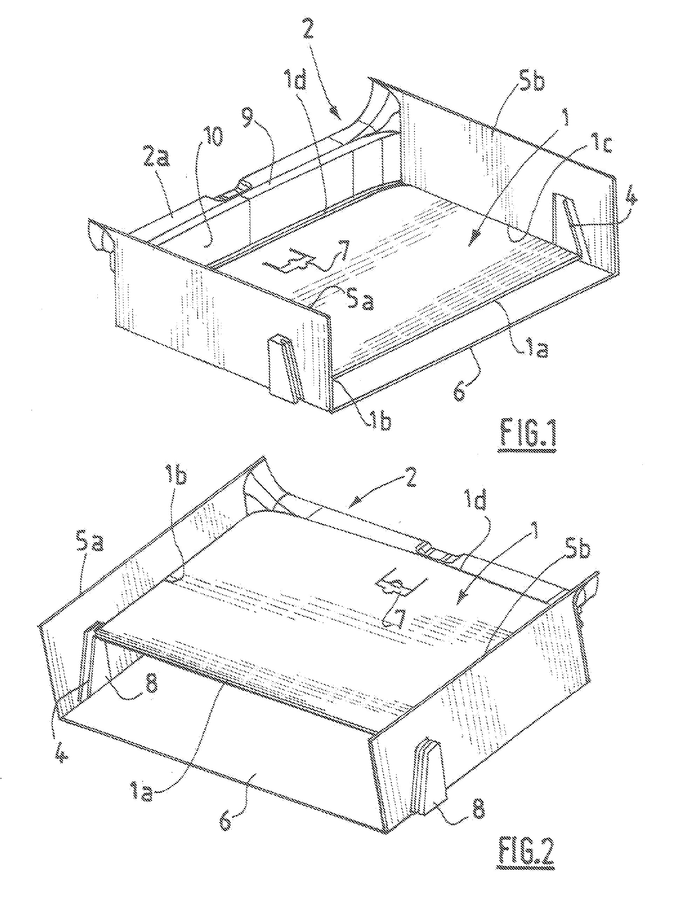

Les figures annexées, en particulier les figures 1 et 2, représentent un plancher de coffre mobile pour véhicule automobile, comportant un plateau 1 déplaçable entre une position basse et une position haute sensiblement horizontales dans le coffre à bagages du véhicule.

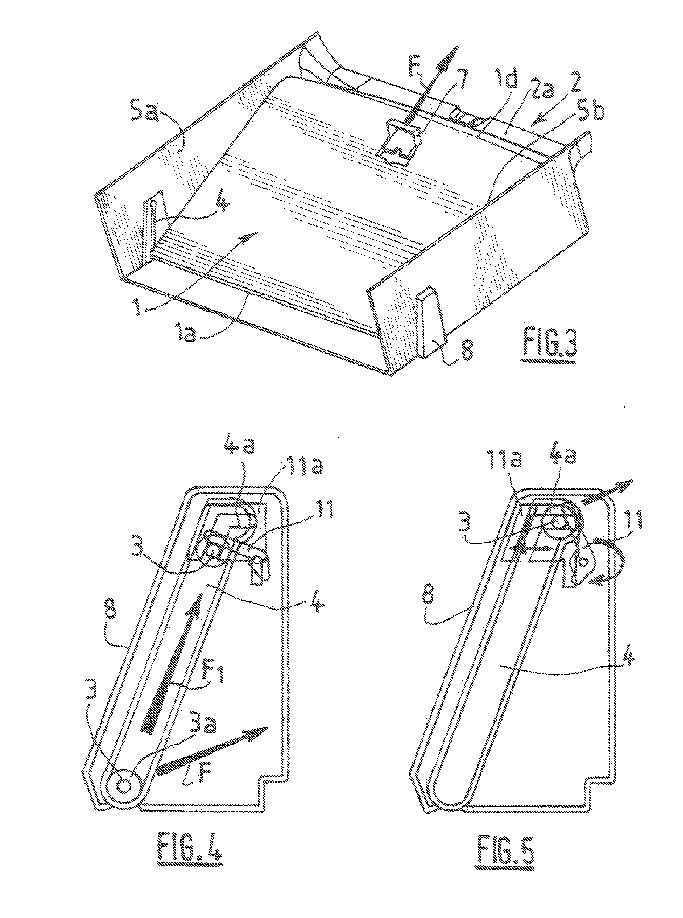

Le plateau 1 comporte près de son extrémité 1a opposée à l'ouverture 2 d'accès au coffre à bagages et sur chacun de ses deux bords longitudinaux 1b, 1c, un axe 3 (voir figures 4 et 5) engagé de façon pivotante dans une glissière inclinée 4 s'étendant dans un plan vertical adjacent à l'une des faces 5a, 5b du coffre et formant avec le plancher fixe 6 de ce coffre un angle aigu (par exemple compris entre 60 et 70 degrés) ouvert vers l'ouverture 2 d'accès au coffre.

Par ailleurs, une poignée 7 fixée au plateau 1 permet de déplacer celui-ci, de telle sorte que chacun des axes 3 se déplace (voir figure 4) dans la glissière 4 correspondante entre une extrémité basse et une extrémité haute de la glissière 4.

Les glissières 4 sont réalisées chacune dans un boîtier 8 en matière plastique fixé contre la face latérale 5a ou 5b.

D'autre part, des moyens de retenue pour l'extrémité 1d du plateau 1 opposée aux axes 3 sont prévus dans une zone située près de l'ouverture d'accès 2 pour maintenir le plateau 1 dans une position horizontale, lorsque les axes 3 sont situés aux extrémités hautes des glissières 4.

En outre, des moyens de verrouillage sont prévus pour verrouiller le plateau 1 dans la position haute précitée.

Dans l'exemple représenté sur les figures 4 et 5, l'extrémité haute de chaque glissière 4 comporte une partie sensiblement horizontale 4a sur laquelle peut s'engager l'axe 3 correspondant du plateau 1 lorsque celui-ci est dans la position haute.

Cet engagement a pour effet de retenir le plateau 1 dans cette position.

Par ailleurs, sur chaque axe 3 est montée une bague rotative 3a ou patin ou tout autre moyen permettant la rotation ou la translation du moyen engagé sensiblement sans jeu dans la glissière 4 correspondante, afin de réduire les frottements avec cette dernière.

Les moyens de retenue, évoqués plus haut, comprennent un épaulement 9 réalisé dans le coffre arrière près du bord inférieur 2a de l'ouverture d'accès 2 à ce coffre.

Dans l'exemple montré par la figure 1, cet épaulement 9 est formé sur l'habillage intérieur 10 du coffre arrière.

Dans la position haute, le bord 1d du plateau s'appuie sur l'épaulement 9.

Par ailleurs, les moyens de verrouillage, évoqués plus haut, sont adaptés pour verrouiller chacun des axes 3 lorsque ceux-ci sont engagés sur la partie sensiblement horizontale 4a (voir figure 4) prévue sur l'extrémité supérieure de la glissière 4 correspondante.

Ces moyens de verrouillage sont adaptés pour verrouiller l'axe 3 sous l'effet d'une traction exercée sur le plateau 1 et pour déverrouiller l'axe 3 sous l'effet d'une poussée exercée sur le plateau 1.

Ce type de verrouillage est communément appelé « push-pull » par les spécialistes.

Dans l'exemple représenté sur les figures 4 et 5, les moyens de verrouillage précités comprennent un levier pivotant 11 sollicité par un ressort de rappel (non représenté) exerçant une force sur l'axe 3 pour verrouiller ce dernier lorsqu'il est engagé sur la partie supérieure sensiblement horizontale 4a de la glissière 4, comme montré sur la figure 5.

A cet effet, le levier 11 poussé par l'axe déplace la pièce 11a qui se place alors sous l'axe 3 empêchant celui-ci de redescendre.

Le dispositif reprend sa place initiale par l'intermédiaire d'un ressort de rappel (non représenté) lors de la descente du plateau.

En position non utilisée, le plateau 1 repose sur le plancher fixe 6 du coffre à bagages.

Les axes 3 du plateau 1 sont situés à l'extrémité inférieure des glissières 4.

Pour mettre le plateau 1 en position haute, l'utilisateur tire sur la poignée 7 pour faire pivoter le plateau 1 vers le haut, comme montré sur la figure 3, pour le dégager du bord supérieur 2a de l'ouverture d'accès 2.

Il suffit ensuite de tirer le plateau 1 dans le sens de la flèche F représentée sur les figures 3 et 4.

Cette traction a pour effet de faire remonter les axes 3 du plateau 1 (voir flèche F1, figure 4) dans les glissières 4.

Avant d'atteindre l'extrémité supérieure de la glissière l'axe 3 rencontre le levier pivotant 11 et le fait basculer autour de son axe contre l'action du ressort de rappel.

En fin de course, l'axe 3 s'engage sur la partie supérieure sensiblement horizontale 4a de la glissière 4 où cet axe 3 est verrouillé du fait de l'action du levier 11 et de la pièce 11a.

Il suffit alors de rabattre légèrement le plateau 1 pour que son extrémité 1d s'appuie sur l'épaulement 9.

Dans une variante non représentée, l'ensemble est complété par le verrouillage du plateau en sa partie avant, de façon latérale par un système de retenue du type boîte à gant à axe rétractable lors de la levée de la poignée.

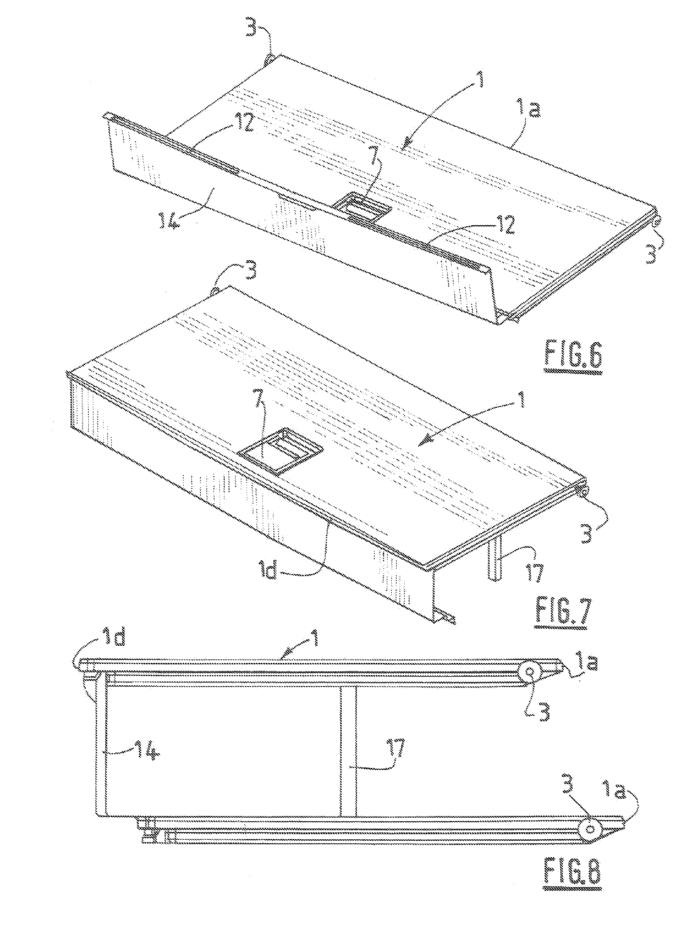

Le second mode de réalisation, illustré par les figures 6 à 12, comprend comme dans le premier mode, un plateau 1 déplaçable entre une position basse (voir figures 6 et 8) et une position haute (voir figures 7 et 8).

L'extrémité 1a du plateau 1 comporte de chaque côté un axe 3 qui est comme précédemment engagé dans une glissière 4 inclinée qui guide le déplacement du plateau 1 entre la position basse et la position haute.

Les différences entre le second mode de réalisation et le premier mode se situent au niveau des moyens de retenue et de verrouillage du plateau.

Le plateau 1 peut en outre comporter des pieds 17 rabattables (voir figure 8) permettant d'augmenter la capacité de charge du plateau et les dimensions de celui-ci.

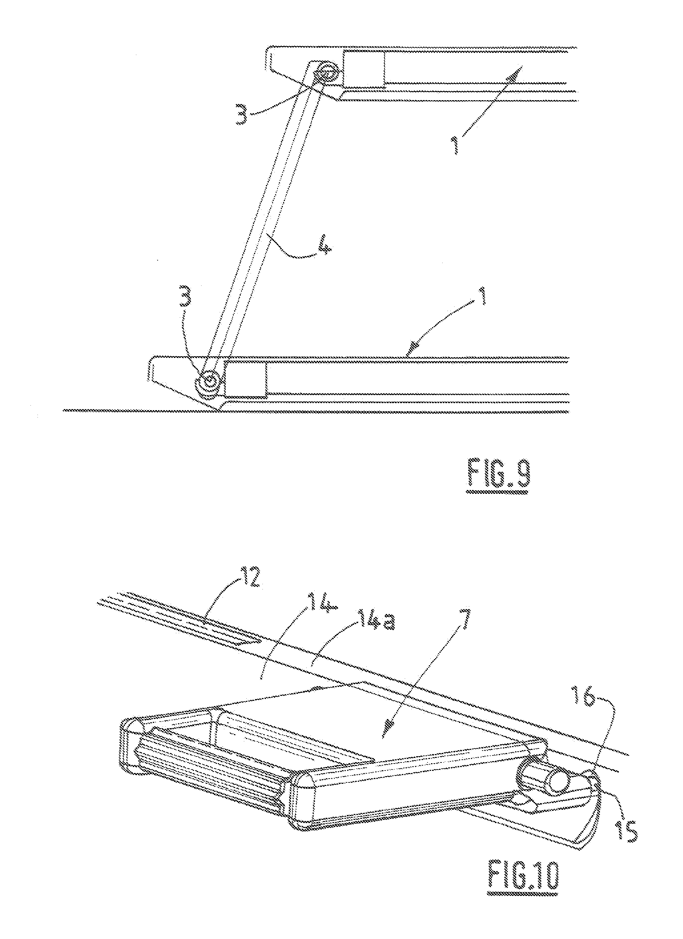

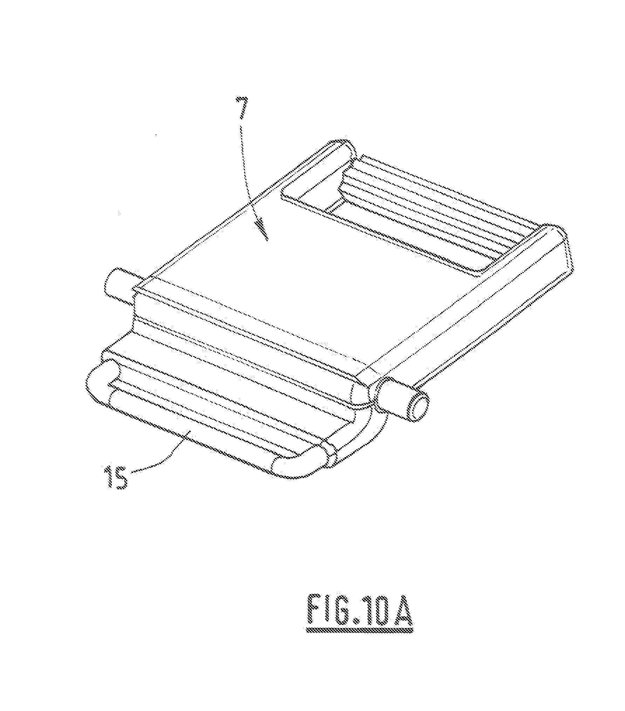

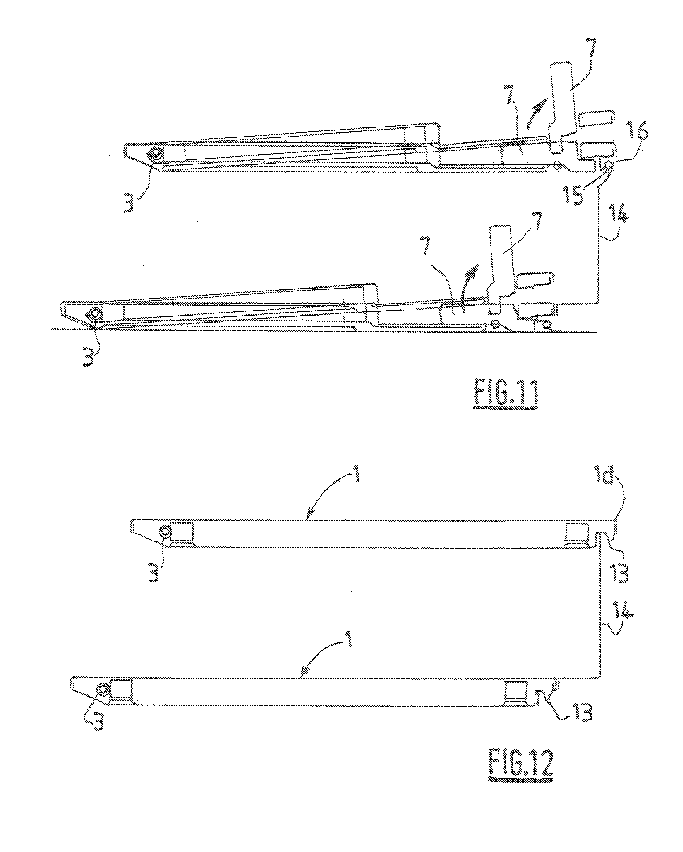

Dans le second mode de réalisation, les moyens de retenue du plateau 1 comprennent au moins un évidement, tel que l'évidement 12 représenté sur la figure 10, réalisé près du bord inférieur de l'ouverture d'accès au coffre dans lequel peut s'engager au moins une saillie complémentaire 13 (voir figure 12) réalisée sur l'extrémité 1d du plateau 1 adjacente à l'ouverture d'accès au coffre.

Dans l'exemple représenté, le ou les évidements 12 sont réalisés sur le bord supérieur d'une plaque 14 fixée sous le bord inférieur de l'ouverture d'accès au coffre.

Comme dans la première version, la poignée 7 est située près de l'extrémité 1d du plateau 1 adjacente à l'ouverture d'accès au coffre.

Cependant, dans la seconde version, la poignée 7 est mobile entre une position encastrée dans le plateau 1 dans laquelle elle verrouille le plateau par rapport à une partie fixe 14 du coffre à bagages située sous le bord inférieur de l'ouverture d'accès au coffre et une position dressée vers le haut (voir figure 11) dans laquelle la poignée 7 déverrouille le plateau 1 par rapport à la partie fixe 14.

Dans l'exemple représenté sur les figures 10, 10A et 11, la poignée 7 comporte un organe 15 qui, en position de verrouillage, fait saillie par rapport à l'extrémité du plateau 1 et vient en prise avec un organe complémentaire 16 réalisé dans une cavité 17 formée sur une plaque 14 fixée sous le bord inférieur de l'ouverture d'accès au coffre.

Par ailleurs, le second mode de réalisation comprend en outre des moyens pour verrouiller le plateau 1 par rapport à la partie fixe 14 située sous le bord inférieur de l'ouverture d'accès au coffre, lorsque le plateau 1 est en position basse.

Ces moyens de verrouillage sont analogues à ceux assurant la retenue du plateau 1, en position haute, comme montré par la figure 12.

En effet, dans la position basse du plateau 1, les saillies 13 portées par l'extrémité 1d du plateau sont engagées dans des évidements prévus à la base de la plaque 14, mais décalés vers l'intérieur du coffre, compte-tenu de l'inclinaison des glissières 4.

De plus, dans cette position basse, la poignée 7, en position rabattue verrouille le plateau 1 par rapport à la plaque 14, comme dans le cas de la position haute.

Le déplacement du plateau 1 de la position basse vers la position haute est réalisé de la même façon que dans le cas du premier mode de réalisation.

En fin de course, l'extrémité du plateau 1 est rabattue sur le bord supérieur de la plaque 14 de façon que les saillies 13 s'engagent dans les évidements 12, ce qui assure une excellente retenue du plateau.

Il suffit ensuite de rabattre la poignée pour verrouiller complètement le plateau pour empêcher tout mouvement de celui-ci susceptible de générer du bruit, lors du déplacement du véhicule.

De même, ce verrouillage en position basse du plateau, empêche tout déplacement de celui-ci et évite par conséquent tout bruit susceptible de gêner le confort des occupants.

La poignée 7 permet le verrouillage du plateau 1 sans utiliser le système de la première version et de ne pas utiliser un verrouillage latéral.

La forme de la zone de préhension de cette poignée permet de la saisir, quelle que soit sa position dans son logement du plateau, d'une manière souple et avec une excellente préhension.

Dans les deux modes de réalisation, le plateau 1 peut être constitué par une plaque relativement mince en matière plastique supportée par une armature en métal.

## Revendications

1. Plancher de coffre mobile pour véhicule automobile, comportant un plateau (1) déplaçable entre une position basse et une position haute sensiblement horizontales dans le coffre à bagages du véhicule, **caractérisé en ce que** le plateau (1) comporte, près de son extrémité opposée à l'ouverture d'accès (2) au coffre à bagages et sur chacun de ses deux bords longitudinaux, un axe (3) engagé de façon pivotante dans une glissière (4) inclinée s'étendant dans un plan vertical adjacent à l'une des faces du coffre et formant avec le plancher fixe (6) de ce coffre un angle aigu ouvert vers ladite ouverture d'accès (2), une poignée (7) fixée au plateau (1) permettant de déplacer celui-ci, de telle sorte que chacun desdits axes (3) se déplace dans la glissière correspondante (4) entre une extrémité basse et une extrémité haute de la glissière, des moyens de retenue pour l'extrémité du plateau (1) opposée aux dits axes (3) étant prévus dans une zone située près de ladite ouverture d'accès (2) pour maintenir le plateau (1) dans une position horizontale lorsque lesdits axes (3) sont situés aux extrémités hautes des glissières (4) et des moyens de verrouillage étant prévus pour verrouiller le plateau (1) dans cette position, **en ce que** l'extrémité haute de chaque glissière (4) comporte une partie sensiblement horizontale (4a) sur laquelle peut s'engager l'axe (3) correspondant du plateau (1), lorsque celui-ci est dans la position haute, **en ce que** lesdits moyens de verrouillage sont adaptés pour verrouiller ledit axe (3) lorsque celui-ci est engagé sur la partie sensiblement horizontale (4a) prévue sur l'extrémité supérieure de la glissière correspondante (4) **et en ce que** lesdits moyens de verrouillage sont adaptés pour verrouiller ledit axe (3) sous l'effet d'une traction exercée sur le plateau (1) et pour déverrouiller ledit axe (3) sous l'effet d'une poussée exercée sur ledit plateau (1).

2. Plancher de coffre selon la revendication 1, **caractérisé en ce que** sur chaque axe (3) est montée une bague rotative (3a) ou un patin ou tout autre moyen permettant la rotation ou la translation du moyen engagé sensiblement sans jeu dans la glissière correspondante (4).

3. Plancher de coffre selon l'une des revendications 1 et 2, **caractérisé en ce que** lesdits moyens de retenue comprennent un épaulement (9) réalisé dans le coffre arrière près du bord inférieur de l'ouverture d'accès (2) à ce coffre.

4. Plancher de coffre selon la revendication 3, **caractérisé en ce que** ledit épaulement (9) est formé sur l'habillage intérieur (10) du coffre arrière.

5. Plancher de coffre selon l'une quelconque des revendications précédentes, **caractérisé en ce que** lesdits moyens de verrouillage comprennent un levier pivotant (11) sollicité par un ressort de rappel exerçant une force sur ledit axe (3) pour verrouiller ce dernier par l'intermédiaire d'un organe de verrouillage (11a) lorsqu'il est engagé sur ladite partie sensiblement horizontale (4a).

6. Plancher de coffre selon l'une des revendications 1 et 2, **caractérisé en ce que** lesdits moyens de retenue comprennent au moins un évidement (12) réalisé près du bord inférieur de l'ouverture d'accès au coffre dans lequel peut s'engager au moins une saillie complémentaire (13) réalisée sur l'extrémité du plateau (1) adjacente à l'ouverture d'accès au coffre.

7. Plancher de coffre selon la revendication 6, **caractérisé en ce que** ledit au moins un évidement (12) est réalisé sur le bord supérieur d'une plaque (14) fixée sous le bord inférieur de l'ouverture d'accès au coffre.

8. Plancher de coffre selon l'une des revendications 6 ou 7, **caractérisé en ce que** la poignée (7) est située près de l'extrémité du plateau (1) adjacente à l'ouverture d'accès au coffre, ladite poignée (7) étant mobile entre une position encastrée dans le plateau (1) dans laquelle elle verrouille le plateau (1) par rapport à une partie fixe (14) du coffre à bagages située sous le bord inférieur de l'ouverture d'accès au coffre et une position dressée vers le haut dans laquelle la poignée (7) déverrouille le plateau par rapport à la partie fixe (14).

9. Plancher de coffre selon la revendication 6, **caractérisé en ce que** la poignée (7) comporte un organe (15) qui, en position de verrouillage, fait saillie par rapport à ladite extrémité du plateau (1) et vient en prise avec un organe complémentaire (16) réalisé dans une plaque (14) fixée sous le bord inférieur de l'ouverture d'accès au coffre.

10. Plancher de coffre selon l'une des revendications 6 à 9, **caractérisé en ce qu'**il comprend en outre des moyens pour verrouiller le plateau (1) par rapport à une partie fixe (14) située sous le bord inférieur de l'ouverture d'accès au coffre, lorsque le plateau (1) est en position basse.

11. Plancher de coffre selon la revendication 10, **caractérisé en ce que** lesdits moyens sont analogues à ceux assurant la retenue du plateau (1), en position haute.
